# EUROPÄISCHE PATENTSCHRIFT

(11) **EP 3 373 092 B1**
(45) Veröffentlichungstag und Bekanntmachung des Hinweises auf die Patenterteilung: **26.02.2020**
(21) Anmeldenummer: 17020091.9
(22) Anmeldetag: 08.03.2017
(51) Int. Cl.: G05D 1/00

(54) **VERFAHREN ZUM LOKALISIEREN EINER STÖRUNG EINES SYSTEMS**
METHOD FOR LOCATING A FAULT OF A SYSTEM
PROCÉDÉ DE LOCALISATION D'UNE DÉFAILLANCE D'UN SYSTÈME

(43) Veröffentlichungstag der Anmeldung: 12.09.2018
(73) Patentinhaber: vaireco GmbH, 78467 Konstanz (DE)
(72) Erfinder: Herbst, Wolfgang, 78464 Konstanz (DE); Varner, Kenneth, 78464 Konstanz (DE)
(74) Vertreter: Heyerhoff Geiger & Partner Patentanwälte PartGmbB

(56) Entgegenhaltungen:
- US-B1- 9 129 355
- US-B1- 9 513 635

## Beschreibung

Die Erfindung betrifft ein Verfahren zum Lokalisieren einer Störung eines Systems, bei dem ein unbemanntes Fluggerät das System überfliegt und Bilder vom System aufnimmt und aus Bilddaten gewonnene visuelle Information an einen das Fluggerät vom Boden aus bedienenden Bediener gesendet wird.

Große technische Anlagen, beispielsweise Windparks oder Solaranlagen mit einem großen Feld von PV-Modulen, können heute von unbemannten Fluggeräten, beispielsweise Multikoptern, auf technische Defekte untersucht werden. Hierfür ist das Fluggerät mit einer Kamera ausgestattet, das während des Flugs Bilder von der Anlage beziehungsweise einem interessierenden Bauteil erstellt und zur Defekterkennung auf einer Speicherkarte an Bord des Fluggeräts abspeichert. Nach dem Flug werden die aufgenommenen Bilder von der Speicherkarte ausgelesen und auf Defekte hin überprüft. Auf eine aufwändige Begehung der Anlage kann verzichtet werden.

Aus der US9129355B1 ist eine solche Inspektion von Infrastruktur-Anlagen aus der Luft mittels unbemannten Fluggeräten bekannt. Die Anlage wird erkannt und von einer Kamera des Fluggeräts aufgenommen. Die Bilder werden auf einem Bildschirm dargestellt, sodass ein Bediener die Anlage auf Schäden untersuchen kann.

Inspektionen von vertikalen Strukturen mit Gefahrenzonen, wie Antennenmasten oder Wände von Nuklearanlagen, mittels unbemannten Fluggeräten sind in der US9513635B1 beschrieben. Sichere Flugzonen werden festgelegt und das Fluggerät wird von Flugzone zu Flugzone gesteuert.

Es ist eine Aufgabe der vorliegenden Erfindung, ein verbessertes Verfahren zur zügigen Lokalisierung einer Störung eines Systems anzugeben.

Diese Aufgabe wird durch ein Verfahren der eingangs genannten Art gelöst, bei dem erfindungsgemäß der Bediener die Störung aus der visuellen Information erkennt und ein Signal auslöst und durch das Signal die Übermittlung der Geokoordinaten des unbemannten Fluggeräts und eine Abbildung der Störung an einen bodengebundenen Server übertragen werden.

Die Erfindung geht von der Überlegung aus, dass zur Überprüfung einer Großanlage auf technische Fehler unter Umständen viele tausend Bilder aufgenommen werden, deren Auswertung sich langwierig gestalten kann. Auf diese Weise kann es ein oder sogar zwei Tage dauern, bis ein Defekt erkannt und dadurch behoben werden kann. In dieser langen Zeitspanne kann sich der Defekt vergrößern und erheblichen Schaden anrichten oder, wie bei einem Ausfall eines Teils einer Solaranlage, durch Leistungseinschränkungen zu einem finanziellen Ausfall des Betreibers führen.

Mithilfe der Erfindung kann die Störung unmittelbar erkannt werden und Information über Position und Art der Störung können sehr schnell an den Betreiber der Anlage übermittelt werden. Die Anlage kann schnell repariert werden und es können finanzielle Verluste oder größere Schäden vermieden werden. Zudem kann ein hoher Rechenaufwand, der bei einer Auswertung von vielen tausend Bildern zur Auffindung des Schadens nötig wäre, vermieden werden. Die Störung des Systems wird vom Bediener des Fluggeräts erkannt und durch das Signal markiert. Getriggert durch das Signal werden Angaben über die Störung an den bodengebundenen Server übertragen, sodass hierdurch eine schnelle Behebung der Störung ohne großen Rechenaufwand erfolgen kann.

Das unbemannte Fluggerät kann eine Drohne sein, ein ferngesteuerter Drehflügler, insbesondere ein Multikopter, und/oder allgemeiner ein small unmanned aircraft (SUA) und oder ein micro air vehicle (MAC). Es ist zweckmäßigerweise ein Rotorflügler und wiegt insbesondere weniger als 50 kg.

Das System kann eine technische Anlage mit einer Vielzahl von Geräten und/oder Anlageeinheiten sein. Möglich ist jedoch auch ein Ökösystem, ein System aus einer Ansammlung von Menschen oder ein urbaner Organismus, wie eine Stadt oder ein Stadtteil oder dergleichen. Die Störung des Systems kann ein Defekt in einer technischen Anlage und/oder ein unerwünschter Zustand des Systems sein, beispielsweise eine Anordnung in einer unerwünschten Position, ein Feuer oder eine hilfebedürftige Person an einen unbekannten Ort des Systems.

Das Signal wird vom Bediener zweckmäßigerweise beim Erkennen der Störung ausgelöst und/oder wenn das Fluggerät in einer bekannten Stelle zur Störung positioniert ist. Das Auslösen kann durch einen Knopfdruck oder das Berühren einer berührungssensitiven Schaltfläche oder einen ähnlichen Vorgang erfolgen, wodurch die Signalerzeugung ausgelöst wird. Die visuelle Information ist beispielsweise ein von der Kamera aufgenommenes Bild oder ein Film, der insbesondere vom Fluggerät im Live-Modus an ein Gerät des Bedieners übertragen wird, beispielsweise das Steuergerät zum Steuern des Fluggeräts. Beispielsweise ist die visuelle Information eine Live-Übertragung des Gesichtsfelds oder eines Teils davon der Kamera des Fluggeräts. Die visuelle Information wird zweckmäßigerweise im infraroten Spektralbereich aufgenommen, um thermische Unterschiede der Module unmittelbar in der visuellen Information sichtbar zu machen.

Die Bilder aufnehmende Kamera des Fluggeräts ist zweckmäßigerweise senkrecht nach unten ausgerichtet bei waagerechtem Fluggerät. Auf diese Weise entsprechen seine zweidimensionalen Koordinaten - die Flughöhe also ausgenommen - denen des Bildzentrums des von der Kamera aufgenommen Bilds beziehungsweise Films. Liegt die Störung in der Bildmitte, so kann die Position des Fluggeräts mit derjenigen der Störung gleichgesetzt werden.

Bei einer Inspektion von Brückenelementen, Fassadenteilen oder dergleichen ist die Kamera zweckmäßigerweise waagerecht ausgerichtet. Auf diese Weise kann mithilfe eines Höhensensors des Fluggeräts auch die Höhe eines im Bild aufgenommenen Gegenstands über den Boden beziehungsweise über dem Meeresspiegel bestimmt werden. Generell ist ein Höhensensor im Fluggerät bei waagerechten Inspektionen hilfreich. Der Höhensensor kann Teil eines Datenmoduls sein, das Bestandteil des Fluggeräts ist oder in einem zusätzlichen Datenmodul enthalten ist, das zu dem ansonsten voll einsatzfähigen Fluggerät zusätzlich vorhanden ist.

Bei waagerechter oder schräger Inspektion sollte das Fluggerät nahe an das aufgenommene Bauteil herangeführt werden, damit die Koordinaten des Fluggeräts ähnlich mit denen des aufgenommenen Bauteils sind. Ist dies nicht sinnvoll, so kann das Fluggerät mit einem Kompass oder einem äquivalenten Richtungsgerät und einem Entfernungsmesser ausgerüstet sein, das in Blickrichtung der Kamera gerichtet ist. Durch die Koordinaten des Fluggeräts, die Blickrichtung der Kamera und die Entfernung des Fluggeräts zum abgebildeten Bauteil können dessen Koordinaten ausreichend genau bestimmt werden.

Der Server ist ein bodengebundenes System oder ein Teil davon, das zweckmäßigerweise zur Einleitung einer Behebung der Störung vorbereitet und mit hierfür notwendigen Programmen ausgerüstet ist. Der Server kann ein Managementsystem eines Systembetreibers, ein Rechner einer Leitstelle oder dergleichen sein. Beispielsweise erzeugt der Server einen Reparaturauftrag, der die Schadensart und den Schadensort der Störung beinhaltet.

Leichte unbemannte Fluggeräte, umgangssprachlich auch als Drohne bezeichnet, umfassen üblicherweise einen GPS-Empfänger zur Bestimmung des eigenen Standorts, einen Empfänger zur Flugsteuerung und einen Sender zur Übertragung von Kameradaten an den Bediener. Diese Geräte können auch bei dem durch die Erfindung verwendeten Fluggerät zur Bestimmung der Geokoordinaten, zum Empfangen des Signals und zur Übersendung der Abbildung der Störung verwendet werden. Hierfür bedarf es jedoch eines Eingriffs in das Fluggerät, um an die entsprechenden Datenschnittstellen zu gelangen oder diese zu erzeugen. Dieser Aufwand kann vermieden werden, wenn das Fluggerät einen zweiten Empfänger aufweist, der zum Empfangen des Signals verwendet wird, wohingegen der erste Empfänger zur Flugsteuerung verwendet wird, also zur Entgegennahme der Flugbefehle des Bedieners beziehungsweise seines Steuergeräts. Mit gleichem Vorteil umfasst das Fluggerät zweckmäßigerweise einen zweiten GPS-Empfänger, dessen Koordinaten auf Anforderung durch das Signal an den Server weitergegeben werden. Ein zur Flugsteuerung verwendeter erster GPS-Empfänger muss nicht verwendet werden. Mit gleichem Vorteil ist am Fluggerät ein zweiter Sender vorhanden, der unabhängig von dem Sender ist, der die visuelle Information an den Bediener sendet und die Abbildung der Störung und die Geokoordinaten des Fluggeräts an den Server übermittelt.

Die Übermittlung der Geokoordinaten und der Abbildung der Störung kann unmittelbar an den Server erfolgen, beispielsweise über eine Mobilfunkverbindung, wie eine GSM-Verbindung, UMTS-Verbindung oder LTE-Verbindung. Zweckmäßigerweise werden jedoch die Daten über ein Zwischengerät an den Server übertragen, die Daten werden also vom Fluggerät an das Zwischengerät und vom Zwischengerät an den Server übertragen. Das Zwischengerät ist zweckmäßigerweise eine mobile Kommunikationseinheit am Ort des Bedieners, beispielsweise ein Smartphone, ein Tablet oder eine ähnliche Einrichtung zur Kommunikation. Die Datenübertragung zwischen dem Fluggerät und dem Zwischengerät erfolgt zweckmäßigerweise über ein lokales Funknetz beziehungsweise ein lokales Datenübertragungsverfahren, beispielsweise WLAN, wohingegen die Übertragung vom Zwischengerät zum Server in einem Fernübertragungsverfahren erfolgen sollte, beispielsweise über ein Mobilfunknetz.

Während die visuelle Information zweckmäßigerweise im sichtbaren Spektralbereich gewonnen wurde, die entsprechende Kamera also im visuellen Spektralbereich empfindlich ist, wird die Abbildung der Störung vorteilhafterweise im infraroten Spektralbereich aufgenommen, sodass diese also beispielsweise eine thermografische Abbildung der Störung ist. Auf diese Weise kann ein heißes Gerät, beispielsweise ein defekter Trafo einer Umspannstation, ein defekter PV-String in einer PV-Großanlage oder ein Brand, gut charakterisiert werden. Je nach Art der Störungsfindung kann auch die visuelle Information durch eine Infrarot-Kamera gewonnen werden, wodurch Wärme abstrahlende Gegenstände besonders einfach aufgefunden werden können.

In einer vorteilhaften Ausgestaltung der Erfindung ist das System eine technische Anlage und die Störung ein Defekt eines Elements der Anlage. Die Störung ist beispielsweise ein Riss in einem Windradrotor eines Windparks oder ein Riss in einem Isolator einer Hochspannungsleitung. Sie kann auch ein Defekt in einer Brücke sein, einem Brückenpfeiler, einer Tragkonstruktion, einem Seil, z.B. einer Hängebrücke, einer Seilbahn oder eines Krans. Ebenfalls möglich ist eine defekte elektrische Anlage in einem Verkehrsmittel oder in einem urbanen Umfeld, ein fehlerhaftes Modul einer PV-Anlage oder dergleichen.

Auch im Bauwesen ist die Erfindung hilfreich, z.B. zur Inspektion eines Gebäudes, z.B. einer Fassade eines Hochhauses, oder einer Straße, bei der z.B. die Homogenität des Asphalts untersucht wird. Auch eine Gaslecksuche kann mit Hilfe der Erfindung effizient ausgeführt werden, wenn eine IR-Kamera verwendet wird, mit der das gesuchte Gas abgebildet wird. Allgemein kann die Störung jede Auffälligkeit sein, die von einer Norm abweicht und/oder einen Defekt eines Bauteils darstellt. Beispielhaft seien erwähnt: Schäden, Fehler, Verschmutzungen, oder Farb- oder Formabweichungen.

Die Erfindung ist jedoch nicht nur auf die Inspektion technischer Systeme anwendbar, sondern auch zur Auffindung eines Menschen sinnvoll einsetzbar. So kann beispielsweise mithilfe der Erfindung eine gesuchte Person, wie ein verunglückter Bergsteiger, oder ein Lawinenopfer, schnell lokalisiert und in einem unübersichtlichen Ökosystem, beispielsweise einem Lawinenfeld, schnell aufgefunden und geborgen werden. Auch im Bereich der Sicherheitstechnik ist die Erfindung vorteilhaft einsetzbar, beispielsweise zur Überwachung einer Menschenansammlung, bei der die Störung ein unerwünschtes Verhalten eines oder mehrerer Menschen sein kann, beispielsweise eine randalierende Gruppe in einer Demonstration. Die Störung ist hierbei eine Person in einem unerwünschten Zustand innerhalb eines Natursystems, wie einem Ökosystem, einer Bergwelt oder dergleichen. Entsprechend ist das Verfahren dann ein Verfahren zum Lokalisieren einer Person in der Natur, einer Stadt und/oder innerhalb einer Demonstration oder dergleichen.

Ebenfalls nützlich ist die Erfindung im Bereich der Forst- oder Landwirtschaft, beispielsweise, um Tiere aufzuspüren, wie ein Reh vor einem Mähdrescher, oder Wildschweine, die eine Ernte auf einem Feld beschädigen. Das Verfahren ist dann ein Verfahren zum Lokalisieren von Tieren in einer Landschaft.

Eine weitere vorteilhafte Ausführungsform der Erfindung sieht vor, dass der Bediener den Flug des Fluggeräts von einem mobilen Steuergerät aus steuert und das Signal an einem zusätzlichen Mobilgerät, das vorteilhafterweise internetfähig ist, auslöst. Ein Eingriff in ein Steuerungssystem des unbemannten Fluggeräts kann hierdurch vermieden werden. Das Signal kann von einer Applikation des Mobilgeräts erzeugt werden, das das Signal, beispielsweise über WLAN, zum Fluggerät sendet. Das Fluggerät kann nun auf das Signal hin, also getriggert vom Signal, die Abbildung der Störung, beispielsweise ein Einzelbild der Störung, und seine Koordinaten an das Mobilgerät senden. Dieses kann nun die Daten an den Server weiterleiten.

Die Datenverbindung zwischen Mobilgerät und Fluggerät kann hergestellt werden, indem das Mobilgerät, insbesondere die Applikation, auf Anforderung durch den Bediener die Datenverbindung zum Fluggerät herstellt, beispielsweise eine WLAN-Verbindung. Diese kann bis zur Beendigung des Flugs des Fluggeräts durch den Bediener aufrechterhalten werden, um eine zuverlässige Erzeugung der Abbildung der Störung und Weiterleitung zum Server zu gewährleisten.

Weiter ist es vorteilhaft, wenn das Fluggerät über ein Datenmodul mit einem GPS-Empfänger und einem Sender die Geokoordinaten und die Abbildung der Störung übermittelt. Das Datenmodul kann ein Modul sein, das ein Hersteller des Fluggeräts bereits serienmäßig zum Bereitstellen der üblichen, insbesondere alle herstellerseitig bereitgestellten Funktionen des Fluggeräts im Fluggerät verbaut. Auf den Eingriff in möglicherweise schwer zugängliche Schnittstellen kann jedoch verzichtet werden, wenn es ein zusätzliches Datenmodul ist, bei dem der Sender und GPS-Empfänger zusätzlich vorhanden sind. Es ist dann zweckmäßig, wenn dieses Datenmodul ein zusätzliches Datenmodul zu einem ersten Datenmodul ist, das ebenfalls einen GPS-Empfänger und/oder einen Sender aufweisen kann, mit dem beispielsweise die visuelle Information gesendet wird. Beide Datenmodule sind vorteilhafterweise unabhängig voneinander. Auf die Einrichtung einer separaten Schnittstelle von und zum handelsüblich erworbenen Fluggerät kann verzichtet werden.

Die Abbildung der Störung kann zügig und einfach gesendet werden, wenn das Fluggerät ausgelöst durch das Signal ein vorbestimmtes Bild der Kamera des Fluggeräts aus einem Speichermedium des Fluggeräts ausgelesen und als Abbildung der Störung gesendet wird. Auf die Einrichtung einer separaten Bildschnittstelle kann verzichtet werden und das Abbild der Störung kann von dem Speichermedium, beispielsweise einer Speicherkarte, in einfacher Weise und zügig ausgelesen und verwendet werden.

Ebenfalls möglich und vorteilhaft ist es, wenn im Fluggerät ein von einer Kamera des Fluggeräts aufgenommener Flugfilm vor seiner Speicherung auf einem Speichermedium des Fluggeräts abgegriffen wird. Der Flugfilm kann auf einem zusätzlichen Speicher zwischengespeichert und beispielsweise in einer Schleife stets überschrieben werden, sodass die Größe des Zwischenspeichers gering bleiben kann. Ausgelöst durch das Signal kann ein vorbestimmtes Bild, beispielsweise das zuletzt erzeugte Bild, aus dem Flugfilm aus dem Zwischenspeicher entnommen und als Abbildung der Störung gesendet werden.

Das Maß der Übereinstimmung der Geokoordinaten des Fluggeräts mit den Geokoordinaten der Störung hängt im Wesentlichen ab von der Flughöhe des Fluggeräts. Eine größere Ungenauigkeit liegt in der Aufnahmerichtung, auch bei einer senkrecht nach unten ausgerichteten Kamera. Bei starkem Wind könnte das Fluggerät schräg stehen, auch bei geostationärem Stillstand, und die relativ zum Fluggerät senkrecht nach unten ausgerichtete Kamera könnte in Wirklichkeit schräg stehen, da das gesamte Fluggerät durch das Ausgleichen der Windgeschwindigkeit schräg in der Luft steht. In einem solchen Fall, oder allgemein, wenn der Bediener Zweifel an der Ortsgenauigkeit seiner Aufnahme beziehungsweise der Fluggerätkoordinaten hat, kann er das Fluggerät nach unten absenken, um die Flughöhe über der Störung zu verringern und damit die Positionsbestimmung zu präzisieren.

Entsprechend ist es vorteilhaft, wenn das Fluggerät, ausgelöst durch das Signal, einen vorgegebenen Flugweg verlässt, ein Stück weit in Bildaufnahmerichtung der Abbildung der Störung absinkt und entweder erst jetzt die Geokoordinate bestimmt und zweckmäßigerweise sendet, oder eine weitere Geokoordinate, beispielsweise als Nahkoordinate, aufnimmt und zweckmäßigerweise sendet. Mit gleichem Vorteil kann eine Nahaufnahme der Störung aufgenommen und als Abbildung der Störung oder als zusätzliche Abbildung der Störung an den Server übertragen werden. Das Fluggerät kann nun wieder auf seine vorgegebene Flugbahn aufsteigen und beispielsweise nach einer weiteren Störung suchen.

Um den Bediener zu entlasten, ist es vorteilhaft, wenn das Absinken, Aufsteigen und Weiterfliegen auf der vorgegebenen Flugbahn selbstständig durch das Fluggerät beziehungsweise dessen Steuergerät am Boden erfolgt.

Soll ein großes System kontrolliert werden, so kann das Überfliegen des Systems in einer geringen Höhe zum Erzeugen von ausreichend genauen Störungsabbildungen einen großen Zeitraum benötigen. Die Störung wird erst spät erkannt, wodurch dem Betreiber ein finanzieller Schaden entstehen kann. Zudem kann ein das gesamte System abrasternder Flugweg ineffizient sein, da lange geflogen werden muss, um eine Störung zu lokalisieren.

Dieser Nachteil kann vermieden werden, wenn das Fluggerät das System zunächst in einer größeren Höhe überfliegt. Die größere Höhe ist in Relation zur geringeren Höhe zu sehen, in der das Fluggerät fliegt, wenn die Geokoordinaten und die Abbildung der Störung aufgenommen werden. In der größeren Höhe sollte das gesamte System durch eine Kamera des Fluggeräts in einem einzigen Bild abgebildet werden beziehungsweise abbildbar sein, wobei in analoger Weise die Abbildung eines vorbestimmten Teils des Systems, beispielsweise ein einzelner Berghang oder ein einzelner Distrikt einer großen PV-Anlage, ausreicht.

Erkennt der Bediener eine oder mehrere voneinander räumlich getrennte Störungen, so kann er diese auf einer Anzeige, auf der das Übersichtsbild des Systems abgebildet wird, manuell markieren. Die Markierung erfolgt beispielsweise durch einen Mauszeiger oder eine Berührung des Bildschirms oder dergleichen. Vorteilhafterweise wird die Anzahl der markierten Störungen und insbesondere auch ihre räumliche Anordnung zueinander gespeichert. Nun kann das System in der geringeren Höhe überflogen und die visuelle Information an den Bediener gesendet werden, der die zuvor erkannte Störung aus der nunmehr aktuellen visuellen Information erneut erkennt und das Signal auslöst. Das Fluggerät kann gezielt zu einer aufgefundenen Störung geflogen werden, sodass diese schnell erreicht und lokalisiert werden kann.

Eine zügige und einfache Durchführung des Verfahrens kann erreicht werden, wenn die Position einer markierten Störung berechnet wird und das Fluggerät selbständig diese berechnete Position anfliegt beziehungsweise jede der berechneten Positionen wenn mehrere Störungen markiert wurden. Die aus der Markierung berechnete Position der Störung wird in der Regel zu ungenau sein, um sie als Geokoordinaten an den Server zu übersenden. Ein Hinfliegen zur Störung und eine genauere Lokalisierung ist daher sinnvoll.

Bei einer Fernerkennung von mehreren Störungen kann es vorkommen, dass der Bediener Fehler macht und optische Erscheinungen als Störung markiert, die in Wirklichkeit keine Störung sind. Dies wird der Bediener erkennen, wenn er zur vermeintlichen Störung fliegt und diese durch die nunmehr genauere visuellen Informationen besser erkennen kann. Stellt sich heraus, dass die vermeintliche Störung keine Störung ist, so sollte diese Stelle trotzdem quittiert werden, damit sichergestellt ist, dass jede der markierten - gegebenenfalls vermeintlichen - Störungen auch angeflogen und untersucht wurde und keine vergessen wurde.

Es ist insofern vorteilhaft, wenn der Bediener zu jeder der markierten Störungen ein Signal auslöst, auch dann, wenn sich herausstellt, dass die betreffende Störung nur eine vermeintliche Störung war, da in Wirklichkeit keine Störung vorliegt. Um ein unnötiges Senden von Geokoordinaten und einer Abbildung der vermeintlichen Störung an den Server zu vermeiden, ist es zweckmäßig, wenn das Signal vom Bediener festgelegte Information enthält, ob die zuvor markierte Störung tatsächlich eine Störung ist oder nicht. Je nach dieser festgelegten Information werden die Geokoordinaten und die Abbildung der Störung an den Server übertragen oder nicht.

Um keine der markierten Störungen zu vergessen, ist es vorteilhaft, wenn dem Bediener angezeigt wird, ob alle markierten Störungen angeflogen wurden. Beispielsweise erhält der Bediener eine Liste der ungefähren Koordination der markierten Störungen zusammen mit einer Markierung, ob die entsprechende Stelle bereits angeflogen wurde.

Bei einer großen Anlage und mehreren erkannten Störungen kann es schwierig sein, eine zuvor markierte Störung zu finden und zielstrebig anzufliegen. Generell kann das Überfliegen des Systems zeitlich gestrafft werden, wenn das Fluggerät das System zunächst in einer größeren Höhe überfliegt, aus der das gesamte System oder ein vorbestimmter Teil des Systems durch eine Kamera des Fluggeräts abgebildet wird, und der Bediener einen Umriss des Systems oder desjenigen Teils des Systems, der die erkannten Störungen enthält, markiert. Nicht von einer Störung des Systems betroffene Systembereiche können ausgelassen werden. Außerdem kann eine Flugroute über den zu überprüfenden Teil des Systems automatisiert erstellt werden.

Außerdem ist es vorteilhaft, wenn der Bediener zwei oder mehr Positionen in der Abbildung des Systems markiert. Das Fluggerät kann nun zu beiden Positionen fliegen und deren Geokoordinaten bestimmen. Mithilfe der Geokoordinaten kann ein Maßstab des Übersichtsbilds berechnet werden. Nun kann beispielsweise eine Flugroute über das System berechnet werden, sodass ein unnötiges Fliegen von Schleifen vermieden wird. Beispielsweise kann aus den Geokoordinaten der zumindest zwei Positionen die Geokoordinaten des Umrisses, eine Größe des Umrisses beziehungsweise des umrissenen Teilbereichs des Systems oder eine analoge Größe bestimmt und daraus die Flugroute berechnet werden.

Es kann vorkommen, dass der Bediener auch bei einem Hinfliegen zu einer vermeintlichen Störung diese fälschlicherweise als Störung klassifiziert, sodass beispielsweise eine unnötige Reparatur veranlasst wird. Um dies zu vermeiden, ist es vorteilhaft, wenn die Abbildung der Störung auf eine Störungseigenschaft untersucht wird und ein entsprechendes Untersuchungsergebnis klassifiziert wird. Beispielsweise kann erkannt werden, dass es sich bei der vermeintlichen Störung um eine minder relevante Störung oder sogar ein störungsfreies Gebiet handelt.

Generell kann die Ausdehnung der Störung als Störungseigenschaft bestimmt werden. Es wird die Abbildung der Störung auf die Ausdehnung der Störung in der Realität untersucht. Bei einer Photovoltaikanlage kann bestimmt werden, über wie viele PV-Module die Störung reicht. Nun kann die Störung in Abhängigkeit ihrer Ausdehnung klassifiziert werden. Umfasst die Störung beispielsweise mehrere PV-Module, so kann es sich im Wesentlichen nur um einen defekten Modulstring handeln, der insgesamt ausgefallen und hierdurch wärmer als umgehende Module ist. Sind beispielsweise eine Anzahl von Module durch irgendeinen Effekt, beispielsweise eine Lichtreflektion, wärmer als die umgebenden Module, so umfasst die wärmere Stelle in der Regel nicht exakt den örtlichen Bereich eines Strings. Dies würde bei der Überprüfung auffallen, beispielsweise weil die wärmeren Module in einer anderen Anzahl vorliegen, als die Strings dieser Anlage Module haben. Auch Sonnenreflexe, die der Bediener irrtümlich als Störung markiert hat, können auf diese Weise erkannt werden.

Als weitere Maßnahme ist es vorteilhaft, dem Bediener in Abhängigkeit des Ergebnisses der Klassifikation eine Mitteilung mit einer Fluganweisung zu machen. Der Bediener kann beispielsweise den Ort der vermeintlichen Störung aus einer anderen Richtung mit der Kamera des Fluggeräts betrachten, um den Ort der vermeintlichen Störung noch einmal und genauer zu untersuchen.

Die Erfindung betrifft außerdem eine Vorrichtung zum Lokalisieren einer Störung eines Systems, umfassend ein unbemanntes Fluggerät mit einer Kamera, ein Steuergerät für einen das Fluggerät vom Boden aus bedienenden Bediener mit einer Anzeige zum Anzeigen von aus Bilddaten der Kamera gewonnener visueller Information.

Um eine verbesserte Vorrichtung zur zügigen Lokalisierung einer Störung eines Systems zu erreichen, wird vorgeschlagen, dass die Vorrichtung erfindungsgemäß ein Signalgerät mit einem Auslöser zum Auslösen eines Signals durch den Bediener und zum Senden des Signals an das Fluggerät aufweist, und das Fluggerät ein Datenmodul enthält, das dazu vorbereitet ist, ausgelöst durch das Signal die Übermittlung der aktuellen Geokoordinaten des Fluggeräts und einer von der Kamera aktuell aufgenommenen Abbildung an einen bodengebundenen Server zu steuern.

Die bisher gegebene Beschreibung vorteilhafter Ausgestaltungen der Erfindung enthält zahlreiche Merkmale, die in einigen abhängigen Ansprüchen zu mehreren zusammengefasst wiedergegeben sind. Diese Merkmale können jedoch zweckmäßigerweise auch einzeln betrachtet und zu sinnvollen weiteren Kombinationen zusammenfasst werden, insbesondere bei Rückbezügen von Ansprüchen, sodass ein einzelnes Merkmal eines abhängigen Anspruchs mit einem einzelnen, mehreren oder allen Merkmalen eines anderen abhängigen Anspruchs kombinierbar ist. Außerdem sind diese Merkmale jeweils einzeln und in beliebiger geeigneter Kombination sowohl mit dem erfindungsgemäßen Verfahren als auch mit der erfindungsgemäßen Vorrichtung gemäß den unabhängigen Ansprüchen kombinierbar. So sind Verfahrensmerkmale auch als Eigenschaft der entsprechenden Vorrichtungseinheit gegenständlich formuliert zu sehen und funktionale Vorrichtungsmerkmale auch als entsprechende Verfahrensmerkmale.

Die oben beschriebenen Eigenschaften, Merkmale und Vorteile dieser Erfindung, sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Die Ausführungsbeispiele dienen der Erläuterung der Erfindung und beschränken die Erfindung nicht auf die darin angegebene Kombination von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und/oder mit einem beliebigen der Ansprüche kombiniert werden.

Es zeigen:
- FIG 1: Eine Photovoltaikanlage als ein System, das auf Störungen untersucht werden soll,
- FIG 2: ein unbemanntes Fluggerät mit einer Kamera zur Aufnahme des Systems von oben und einem Bediener, der das Fluggerät bedient,
- FIG 3: das Fluggerät und ein das Fluggerät steuerndes Steuergerät in einer schematischen Darstellung,
- FIG 4: einen Ausschnitt der Photovoltaikanlage in einer schematischen Draufsicht mit einer der Störungen,
- FIG 5: eine schematische Darstellung von Datenströmen zwischen einer Kamera des Fluggeräts und einem zusätzlichen Mobilgerät am Steuergerät,
- FIG 6: eine Draufsicht auf die Photovoltaikanlage mit fünf gekennzeichneten Störungen und
- FIG 7: ein Lawinenfeld in einem Ökosystem, in dem ein Mensch begraben ist.

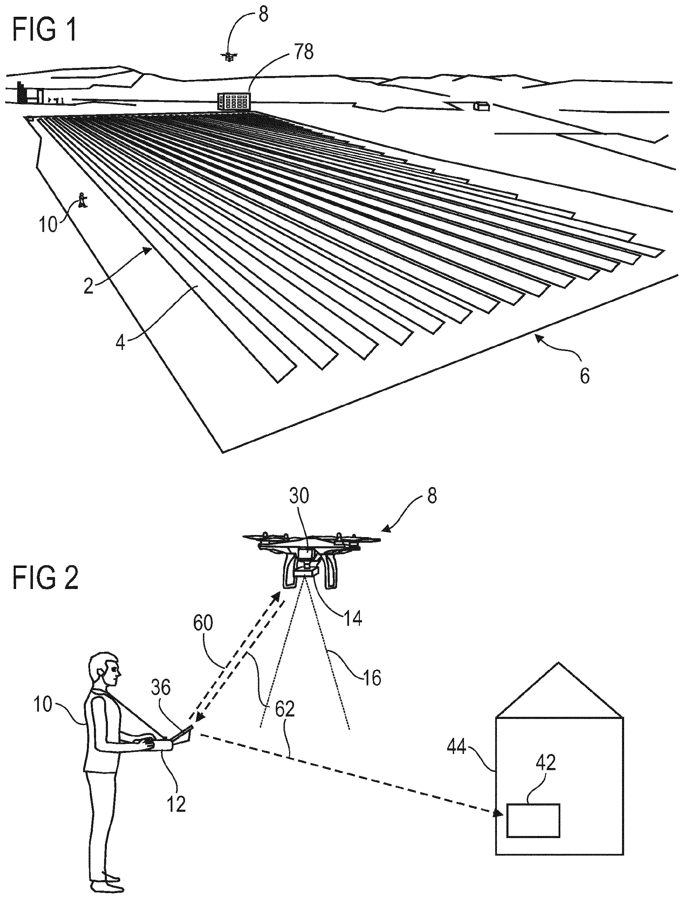

FIG 1 zeigt eine Photovoltaikanlage 2 mit einer Vielzahl von Photovoltaikmodulen 4, die auf nicht dargestellten Ständern auf dem Erdboden in langen Reihen angeordnet sind. Die Photovoltaikanlage 2 ist ein System 6 in Form einer technischen Anlage, das auf Störungen untersucht werden soll. In der Photovoltaikanlage 2 werden solche Störungen durch Ausfälle von Photovoltaikmodulen 4 oder Teilen davon gebildet.

Die Störungen sind in einzelne Schweregrade unterteilt, im einfachsten Fall leichte Störungen und schwere Störungen. Unter leichte Störungen fallen Ausfälle von Modulteilen, also einer einzelnen Zelle oder einem größeren Modulteil, der durch den Defekt einer Bypassdiode verursacht werden kann. Der Ausfall eines ganzen Moduls kann als leichter oder schwerer Defekt klassifiziert werden und wird im Folgenden der Einfachheit halber ebenfalls als leichter Defekt klassifiziert. Eine schwere Störung ist der Ausfall eines gesamten Strings, also einer Vielzahl von nebeneinanderliegenden Photovoltaikmodulen 4. Ein schwerer Defekt erzeugt einen solchen finanziellen Schaden für den Systembetreiber, dass er zügig entdeckt und behoben werden sollte.

Zum Erkennen und Lokalisieren einer technischen Störung des Systems 6 wird ein unbemanntes Fluggerät 8 von einem Bediener 10 gestartet und über das System 6 geflogen. Das Fluggerät 8 nimmt Bilder vom System 6 auf, beispielsweise in Form eines Flugfilms, der durch eine nach unten ausgerichtete Kamera 14 (FIG 2) des Fluggeräts 8 aufgenommen wird. Dieser Flugfilm wird direkt oder komprimiert an ein Steuergerät 12 des Bedieners 10 gesendet, sodass dieser eine Liveaufnahme der Sicht der Kamera 14 des Fluggeräts 8 auf einem Bildschirm vor sich sieht. Anhand dieser Aufnahme kann der Bediener 10 das Fluggerät 8 über das System 6 steuern.

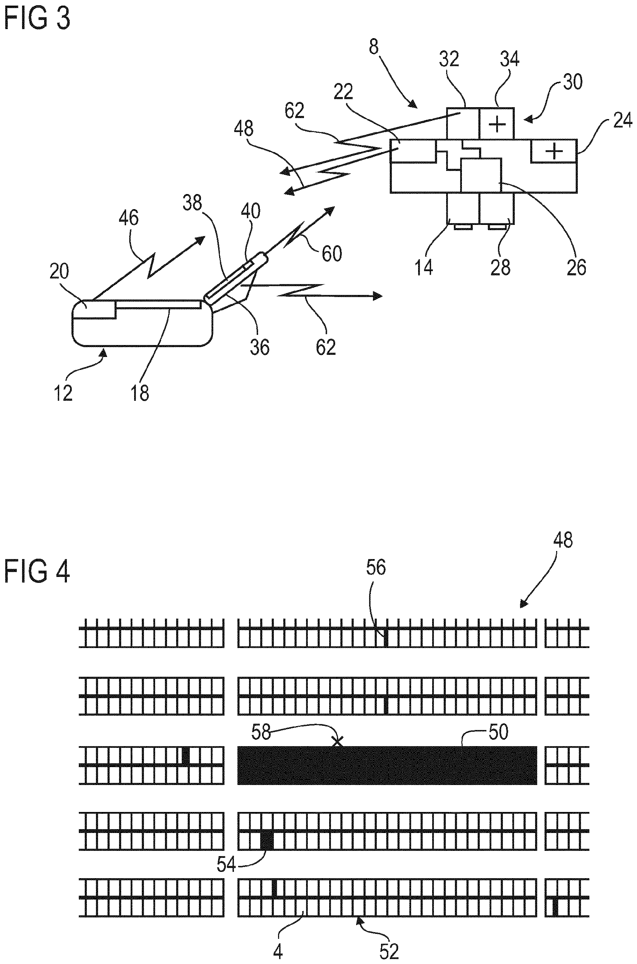

FIG 2 zeigt den Bediener 10 mit seinem Steuergerät 12, mit dem er das unbemannte Fluggerät 8 steuert. FIG 3 zeigt das Steuergerät 12 und das Fluggerät 8 in einer schematischeren Darstellung. Das Fluggerät 8 ist ein Multikopter, in diesem Ausführungsbeispiel ein Quadrokopter, der eine Kamera 14 mit einem senkrecht nach unten gerichteten Blickfeld 16 trägt. Die senkrechte Blickrichtung 16 der Kamera 14 bezieht sich auf die waagerechte Ausrichtung des Fluggeräts 8 in der Luft oder am Boden.

Wie aus FIG 3 zu sehen ist, ist das Steuergerät 12 mit einem Anzeigefeld 18 versehen, auf dem der Flugfilm komprimiert oder unkomprimiert als visuelle Information dem Bediener 10 angezeigt wird. Diese visuelle Information wird also aus den Bilddaten der Kamera 14 gewonnen, drahtlos an das Steuergerät 12 übertragen und dort angezeigt. Das Steuergerät 12 umfasst ferner eine Kommunikationseinheit 20 mit einem Sender, mit dem das Steuergerät 12 Steuerdaten zur Steuerung des Fluggeräts 8 drahtlos an dieses übermittelt. Die Kommunikationseinheit 20 enthält außerdem einen Empfänger zum Empfangen von Steuerdaten, Positionsdaten und die visuelle Information zum Anzeigen des Flugfilms auf dem Anzeigefeld 18.

Auch das Fluggerät 8 umfasst eine Kommunikationseinheit 22 mit einem Sender und einem Empfänger. Diese ist das Gegenstück zur Kommunikationseinheit 20 des Steuergeräts 12 und dient zum besagten Datenaustausch mit dieser. Über einen GPS-Empfänger 24 empfängt das Fluggerät 8 seine aktuellen Positionsdaten und sendet diese über die Kommunikationseinheiten 22 und 20 an das Steuergerät 12 beziehungsweise den Bediener 10. Der GPS-Empfänger 24 und die Kommunikationseinheit 22 bilden ein erstes Datenmodul, das mit dem Steuergerät 12 kommuniziert, und über das die vollständige Information des Fluggeräts 8, wie von dessen Hersteller zur Verfügung gestellt ist, erreicht werden kann. Dies geschieht auch unter Zuhilfenahme weiterer Einheiten, wie einem Speichermedium 26 und einer zweiten Kamera 28. Während die erste Kamera 14 im infraroten Bereich sensitiv ist und thermografische Bilder aufnimmt, ist die zweite Kamera 28 im visuellen Spektralbereich sensitiv und nimmt Bilder beziehungsweise Filme im visuellen Spektralbereich auf. Solche Filme können dem Bediener 10 beim Lenken des Fluggeräts 8 helfen. Der Bediener 10 kann auf dem Steuergerät 12 wählen, ob der angezeigte Film ein Infrarotfilm oder visueller Film ist.

Das Fluggerät 8 umfasst jedoch auch ein zweites Datenmodul 30 mit einer weiteren Kommunikationseinheit 32 umfassend einen Sender 32 und einen Empfänger und einem weiteren GPS-Empfänger 34. Dieses zweite Datenmodul 30 stellt zusätzlich zu den vollständigen vom Empfänger bereitgestellten Funktionen weitere Funktionen des Fluggeräts 8 zur Verfügung. Das zweite Datenmodul 30 kommuniziert mit einem Mobilgerät 36 des Bedieners 10. Dieses ist im gezeigten Ausführungsbeispiel ein Smartphone, das mit einem Halter am Steuergerät 12 befestigt ist. Das Mobilgerät 36 ist in der Lage, eine Nahbereichskommunikation mit dem Fluggerät 8 über ein Nahbereichsprotokoll, beispielsweise WLAN, aufzubauen und eine Fernkommunikation über ein Fernkommunikationsprotokoll, beispielsweise UMTS mit einem Server 42 in einem vom Bediener 10 entfernt angeordneten Gebäude 44 herzustellen. Außerdem enthält das Mobilgerät 36 ein Anzeigefeld 38 und einen Auslöser 40 zum Erzeugen eines Signals 60, das vom Fluggerät 8 empfangen wird.

Während des Flugs des Fluggeräts 8 über das System 6 sendet das Steuergerät 12 Steuerdaten 46 an das Fluggerät 8 zu dessen Steuerung. Die Kommunikationseinheit 22 sendet visuelle Information 48 zum Steuergerät 12 zum Anzeigen für den Bediener 10. Wenn der Bediener 10 anhand der visuellen Information 48 eine Störung 50 (FIG 4) erkennt, markiert er diese, wie im Folgenden anhand der Darstellung aus FIG 4 beschrieben wird.

FIG 4 zeigt die visuelle Information 48 in Form eines Bilds, das einen Ausschnitt des Systems 6 zeigt. In diesem Ausführungsbeispiel umfasst die visuelle Information 48 eine thermografische Darstellung einer Vielzahl von Photovoltaikmodulen 4, die zu einzelnen Strings 52 zusammengefasst sind. Eine Störung 50, also in diesem Fall ein Defekt eines Moduls 4 oder eines Strings 52, ist dadurch erkennbar, dass die betroffenen Module 4 wärmer sind, als die intakten Module 4. Dies ist in der thermografischen Abbildung sichtbar und ist in FIG 4 durch schwarze Flächen angedeutet. Zu sehen ist, dass die Störung 50 ein ausgefallener String 52 ist. Es sind noch weitere Störungen 54, 56 zu sehen, die jedoch erst später beschrieben werden.

Während des Überflugs über das System 6 erkennt der Bediener 10 eine schwere Störung 50 in Form eines ausgefallenen Strings 52. Um diese möglichst genau zu lokalisieren, lenkt er das Fluggerät 8 anhand der visuellen Information 48 über die Störung 50. Er erreicht beispielsweise die in FIG 4 markierte Position 58. Die Position 58 befindet sich selbstverständlich oberhalb der Störung 50, ist jedoch bei einer nur zweidimensionalen Betrachtung direkt an der Störung 50 gelegen. Der Bediener 10 steuert das Fluggerät 8 zur Position 58, indem er so fliegt, dass die Störung 50 zumindest im Wesentlichen in der Mitte des Bildfelds der aufnehmenden Kamera 14 beziehungsweise der visuellen Information 48 liegt, wie in FIG 4 dargestellt ist. Bedingt durch etwas Seitenwind gelingt dem Bediener 10 das nicht ganz, wie in FIG 4 dargestellt ist, jedoch in ausreichendem Maße.

Nun erzeugt der Bediener ein Signal 60, durch das mehrere Aktionen ausgelöst werden. Hierfür umfasst das Mobilgerät 36 den Auslöser 40, beispielsweise in Form einer sensitiven Fläche im Anzeigefeld 38 des Mobilgeräts 36. Das Mobilgerät 36 enthält eine Applikation, die vor oder während des Flugs des Fluggeräts 8 über das System 6 eine Nahbereichsverbindung, im Folgenden vereinfacht als WLAN-Verbindung bezeichnet, mit dem zweiten Datenmodul 30 herstellt. Das Signal 60 wird nun über diese Verbindung zum zweiten Datenmodul 30 beziehungsweise dessen Kommunikationseinheit 32 übersendet. Das zweite Datenmodul 30 liest daraufhin die Geokoordinaten des Fluggeräts 8 aus dem GPS-Empfänger 34 aus und extrahiert zudem eine Abbildung der Störung 50 aus den von dem Fluggerät 8 aufgenommenen Daten. Geokoordinaten und Abbildung, im Folgenden vereinfacht als Koordinatendaten 62 bezeichnet, werden nun an das Mobilgerät 36 gesendet. Dieses leitet die Koordinatendaten 62 in identischer oder veränderter Form über die Fernverbindung zum Server 42 weiter.

Der Server 42 ist Teil eines Managementsystems des Betreibers des Systems 6. Anhand der Koordinatendaten 62 erstellt der Server 42 eine Reparaturanweisung und sendet diese an einen Störungsdienst. Anhand der Abbildung der Störung 50 kann der Störungsdienst Art und Umfang der Störung erkennen. Aus den Positionsdaten der Störung 50 kann der Störungsdienst die Störung 50 ausreichend genau lokalisieren, sodass er weiß, wo der ausgefallene String 52 liegt. Da die Zeitspanne zwischen dem Erzeugen des Signals 60 und dem Erzeugen des Reparaturauftrags nur wenige Sekunden oder maximal Minuten beträgt, kann die Störung 50 sehr schnell behoben werden.

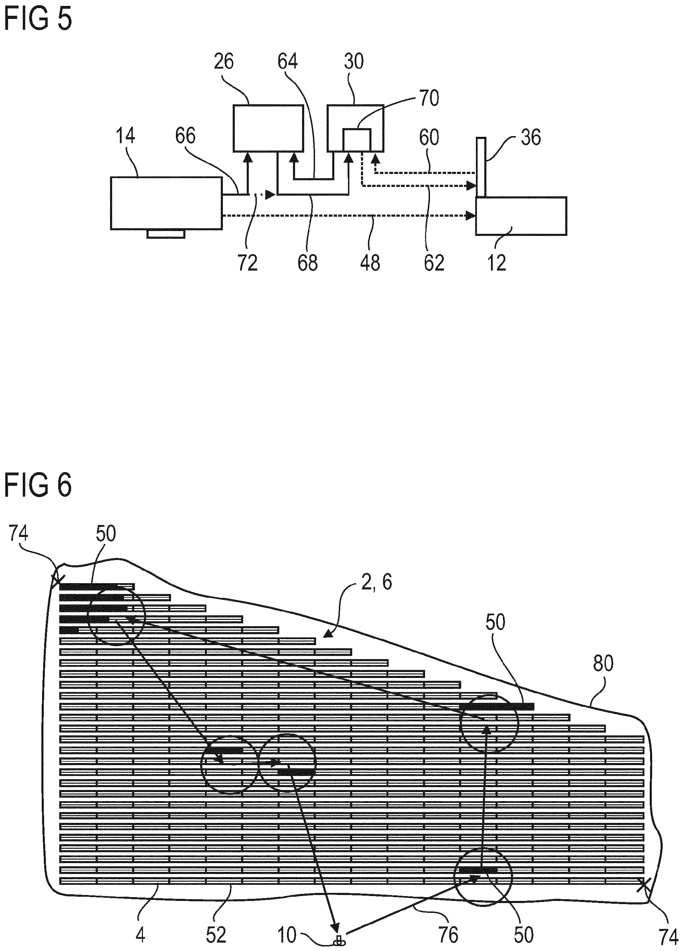

FIG 5 zeigt Möglichkeiten, wie die Abbildung der Störung 50 aus den von dem Fluggerät 8 erzeugten Daten extrahiert werden kann. Schematisch dargestellt sind die Kamera 14, das Steuergerät 12 mit dem daran angebrachten Mobilgerät 36, das Speichermedium 26 des Fluggeräts 8 und das zweite Datenmodul 30 am Fluggerät 8. Gestrichelte Verbindungen sind Drahtlosverbindungen und durchgezogene Verbindungen sind verdrahtete Verbindungen. Eine gepunktete Verbindung ist eine Alternativlösung. Gezeigt ist die Übersendung der visuellen Information 48 vom Fluggerät 8 an das Steuergerät 12. Zudem ist dargestellt das Signal 60 und die Koordinatendaten 62, die vom zweiten Datenmodul 30 an das Mobilgerät 36 übermittelt werden.

Getriggert durch das Signal 60 greift das zweite Datenmodul 30 in einem Schritt 64 auf das Speichermedium 26 zu. In diesem sind die von der Kamera 14 aufgenommenen Bilddaten abgespeichert, wie durch den Schritt 66 dargestellt ist. Das zweite Datenmodul 30 liest nun in Schritt 68 ein oder mehrere der abgespeicherten Bilder ab, beispielsweise das zuletzt von der Kamera 14 vollständig abgespeicherte Bild. Dieses Bild umfasst die Abbildung der Störung 50 und wird in einem Zwischenspeicher 70 des Datenmoduls 30 zwischengespeichert. Zusammen mit den ausgelesenen Geokoordinaten wird dieses Bild nun als Teil der Koordinatendaten 62 an das Mobilgerät 36 gesendet.

Alternativ besteht die Möglichkeit, dass das zweite Datenmodul 30 in der Weise auf die Kameraschnittstelle zugreift, dass sämtliche von der Kamera im Speichermedium 26 abgelegten Daten auch im Zwischenspeicher 70 zwischengespeichert werden, wie durch den gepunkteten Pfeil des Zwischenspeicherschritts 72 in FIG 5 angedeutet ist. Dieser Zwischenspeicher 70 wird regelmäßig überschrieben, beispielsweise alle zehn Sekunden oder jede Minute. Getriggert durch das Signal 60 wird nun eines oder mehrere der im Zwischenspeicher 70 vorhandenen Bilder als Teil der Koordinatendaten 62 an das Mobilgerät 36 versandt.

Um die Störung 50 ausreichend genau lokalisieren zu können, sollte das Fluggerät 8 nur in einer geringen Höhe über das System 6 fliegen. In einer solchen Höhe kann es schwierig sein, alle Störungen 50 des Systems 6 zu erkennen. Insofern ist es vorteilhaft, eine Vorerkennung durchzuführen, die im Folgenden anhand der Darstellung aus FIG 6 beschrieben ist. FIG 6 zeigt eine schematische Draufsicht auf die Photovoltaikanlage 2 beziehungsweise das zu kontrollierende System 6. Gezeigt sind viele Reihen von Photovoltaikmodulen 4, die jeweils aus einer Anzahl von Strings 52 zusammengesetzt sind. Das System 6 wird nun vom Fluggerät 8 so hoch überflogen, dass das gesamte System 6 oder ein vorbestimmt definierter Teilbereich davon in einem Bild vollständig aufgenommen wird, das als visuelle Information 48 dem Bediener 10 angezeigt wird. Der Bediener 10 kann nun aus dieser thermografischen Abbildung die schweren Störungen 50 erkennen. Die leichten Störungen hingegen sind so klein, dass sie in diesem Übersichtsbild nicht erkennbar sind.

Das Übersichtsbild wird dem Bediener 10 auf dem Anzeigefeld 18 des Steuergeräts 12 angezeigt. Es ist jedoch sinnvoll, das Übersichtsbild auf dem Anzeigefeld 38 des Mobilgeräts 36 anzuzeigen, um dessen Informationen besser nutzen zu können. Hierfür erzeugt der Bediener ein anderes Signal 60, das zwar das Extrahieren des von der Kamera 14 erzeugten Bilds bewirkt, das an das Mobilgerät 36 gesendet wird. Auf die Weiterleitung an den Server 42 wird bei diesem Signal 60 jedoch verzichtet.

In dem Ausführungsbeispiel aus FIG 6 ist dargestellt, dass der Bediener 10 auf dem Übersichtsbild fünf Störungen 50 erkennt. Da das Übersichtsbild auf dem Anzeigefeld 38 des Mobilgeräts 36 angezeigt wird, kann er Stellen darin markieren, indem er das Anzeigefeld 38 des Mobilgeräts 36 dort berührt. Er markiert jede einzelne der Störungen 50 in ihrer Position. Die Stelle wird registriert und dem Überblickbild zugeordnet. Die Markierungen sind in FIG 6 beispielhaft durch fünf Kreise dargestellt. Auf diese Weise ist dem Mobilgerät 36 beziehungsweise in diesem Ausführungsbeispiel seiner Applikation bekannt, wie viele Störungen 50 näher untersucht werden müssen. Außerdem wird die relative Lage der Störungen 50 zueinander bestimmt, um diese dann mit den später mit den genaueren Positionen 58 beziehungsweise Geokoordinaten vergleichen zu können. Auf diese Weise kann erkannt werden, wenn der Bediener 10 die genauere Lokalisierung einer der markierten Störungen 50 vergisst und es kann eine Fehlermeldung ausgegeben werden.

Der Bediener 10 kann nun das Fluggerät 8 von Störung 50 zu Störung 50 fliegen, in der Position 58 darüber positionieren und hierdurch die Störungen 50 nacheinander lokalisieren. Jede auf diese Weise genauer lokalisierte Störung 50 wird durch ein Signal 60 quittiert, durch das die Koordinatendaten 62 der Störungen 50 an den Server 42 übertragen werden.

Um den Bediener 10 die Steuerung des Fluggeräts 8 zu den Störungen 50 zu erleichtern, was insbesondere bei einer Vielzahl von vorliegenden Störungen 50 oder einer sehr großen Anlage vorteilhaft ist, kann der Flugweg 76 des Fluggeräts 8 zu den einzelnen Störungen 50 automatisiert bestimmt werden. Das Fluggerät 8 fliegt nun selbständig von Markierung zu Markierung und damit von Störung 50 zu Störung 50. Zur Bestimmung des Flugwegs 76 kann der Bediener 10 beispielsweise zwei oder mehr Positionen 74 in der Übersichtsabbildung markieren. Die Geokoordinaten dieser Positionen 74 sind beispielsweise bekannt, sodass das Mobilgerät 36 nun die absolute Lage der einzelnen Störungsmarkierungen berechnen kann.

Eine weitere Möglichkeit besteht darin, dass das Fluggerät 8 zunächst zu den markierten Positionen 74 geflogen wird, sodass die Geokoordinaten dieser Positionen 74, getriggert durch ein vom Bediener 10 erzeugtes Signal 60 am Mobilgerät 36, bestimmt werden können.

Hat der Bediener 10 beziehungsweise das Fluggerät 8 alle markierten Störungen 50 angeflogen, so ist die Überwachungsaufgabe beendet. Die Abarbeitung kann beispielsweise als eine Liste auf dem Mobilgerät 36 angezeigt werden, auf der die einzelnen Störungen 50 aufgelistet sind. Wird der Anflug einer Störung 50 vergessen, so wird ein Fehlersignal ausgegeben.

Bei dem Beispiel aus FIG 6 ist dargestellt, dass eine der Störungen 50 in der oberen linken Ecke der Anlage nicht nur einen einzelnen ausgefallenen String 52 betrifft. Beim Anflug auf diese Störung 50 erkennt der Bediener 10 durch die Nahaufnahme beziehungsweise die Abbildung der Störung 50, dass es sich hierbei um keine Störung 50 handelt, sondern um einen anderen Effekt, beispielsweise die Sonnenlichtreflektion durch ein Gebäude 78 auf die Anlage, wodurch die entsprechenden Module 4 wärmer sind als die Module 4 in der Umgebung. Die vermeintliche Störung 50 stellt sich als intaktes System heraus, sodass keine Koordinatendaten 62 erzeugt werden müssen. Dennoch sollte diese vermeintliche Störung 50 quittiert werden, um anzuzeigen, dass sie als markierte Stelle angeflogen wurde. Hierfür erzeugt der Bediener 10 beispielsweise das andere Signal, durch das keine Daten an den Server 42 verschickt werden. Dies kann geschehen, indem er an einer anderen Stelle als der Auslöser 40 eine Eingabe in das Mobilgerät 36 beziehungsweise dessen Applikation vornimmt, sodass diese vermeintliche Störung 50 als abgearbeitet gilt beziehungsweise gelöscht wird.

Bei der Darstellung aus FIG 4 ist zu sehen, dass es neben der schweren Störung 50 auch die leichteren Störungen 54, 56 gibt. Eventuell sind auch solche Störungen 54, 56 von Interesse, sodass sie lokalisiert werden sollen. Da diese in einer größeren Anzahl vorliegen als die schweren Störungen 50 und zudem im Übersichtsbild nicht zu sehen sind, muss die gesamte Anlage systematisch überflogen werden, um diese Störungen 54, 56 zu erkennen. Wird dieses systematische Überfliegen von dem Bediener 10 manuell durchgeführt, so ist es gerade bei sehr großen Anlagen fehleranfällig, da eventuell nicht alle Bereiche der Anlage überflogen werden.

Um dies zu vermeiden, wird der Flugweg 76 des Fluggeräts 8 berechnet und das Fluggerät 8 wird selbständig auf diesem Flugweg 76 systematisch über das gesamte System geführt. Hierfür muss jedoch die Ausdehnung des zu überwachenden Systems 6 bekannt sein. Ist dies nicht der Fall, so kann der Bediener 10 auf dem Übersichtsbild eine Umriss 80 der zu kontrollierenden Fläche eingeben, beispielsweise indem er mit seinem Finger auf dem Anzeigefeld 38 entlangfährt und hierdurch den Umriss 80 erzeugt. Anhand der im Vorhinein oder durch Anflug absolut bekannten Positionen 74 kann anhand des Umrisses 80 nun die zu kontrollierende Fläche bestimmt werden.

Der Flugweg 76 ist auch abhängig von der Flughöhe des Fluggeräts 8 über dem System 6. Eine geeignete Flughöhe kann im Vorhinein bestimmt sein, vom Bediener 10 vorgegeben werden oder anhand von optischen Daten berechnet werden. Bei Sonnenlicht und einem hohen Kontrast kann das Fluggerät 8 beispielsweise das System 6 höher überfliegen als bei schlechterer Sicht. Beispielsweise wird ein Übersichtsbild vom Mobilgerät 36 auf seinen Kontrast ausgewertet und hierdurch eine geeignete Flughöhe bestimmt. Der Flugweg 76 kann nun automatisiert festgelegt werden und das Fluggerät 8 rastert das gesamte System 6 systematisch ab. Die Flughöhe kann mit einem Höhensensor des Fluggeräts überprüft und insbesondere geregelt werden. In diesem Beispiel wird die Flughöhe mit einem barometrischen Höhensensor des Fluggeräts selbständig vom Fluggerät geregelt.

Der Bediener 10 kann anhand der permanent übersandten visuellen Information 48 schwere Störungen 50 wie oben beschrieben markieren, sodass sie sehr schnell an den Server 42 übermittelt werden. Die leichten Störungen 54, 56 können in einem späteren Verfahren mittels Bildverarbeitung automatisiert erkannt und lokalisiert werden, sodass sie später ebenfalls behoben werden können.

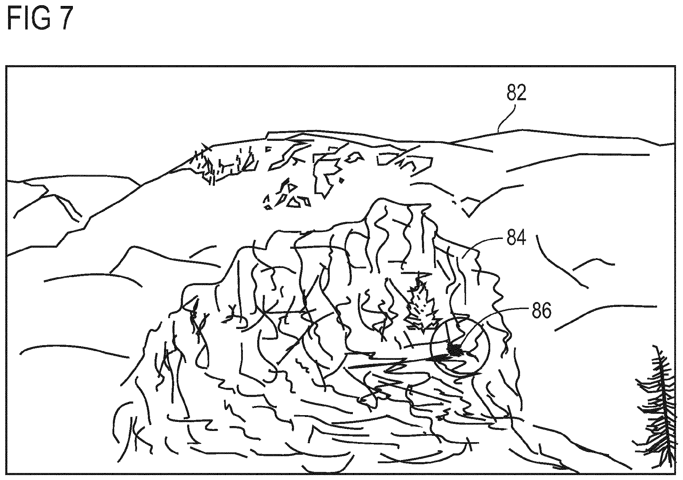

Die Erfindung ist nicht nur auf die Überwachung von Photovoltaikanlagen 2 beschränkt, sondern geeignet, eine Vielzahl von unterschiedlichsten Systemen zu überwachen. Ein Beispiel wird anhand der Darstellung aus FIG 7 erläutert.

FIG 7 zeigt eine Landschaft 82, in der ein Lawinenfeld 84 zu sehen ist. Die Landschaft 82 beziehungsweise das Lawinenfeld 84 können als System betrachtet werden, beispielsweise als Ökosystem oder als zu untersuchendes System allgemein. In dem Lawinenfeld 84 wird ein verschütteter Skifahrer vermutet, der gesucht werden soll. Wie im Vorhergehenden beschrieben ist, kann dies anhand des Fluggeräts 8 erfolgen. Es wird beispielsweise ein Übersichtsbild erstellt und dargestellt, das ähnlich wie die Darstellung aus FIG 7 aussehen kann. Der Bediener 10 sucht nach Störungen 86 im System, die anhand der thermografischen Darstellung optisch identifiziert werden.

Bei dem Beispiel aus FIG 7 findet er beispielsweise eine Störung 86, die sich durch eine leichte Temperaturerhöhung gegenüber der Umgebung abhebt. Vermutlich findet er eine Vielzahl von solchen thermischen Auffälligkeiten, die er - wie im Vorhergehenden beschrieben - markiert und abfliegt. Manche der vermeintlichen Störungen 86 kann er aufgrund deren Größe als Fehlalarm erkennen, beispielsweise wie eine Störung aus FIG 6. Hat er jedoch eine thermische Auffälligkeit entdeckt, die bei näherer Betrachtung als mögliche tatsächliche Störung 86 infrage kommt, so löst er das Signal 60 aus, wodurch die Koordinatendaten 62 erzeugt und an einen Server 42 gesendet werden, beispielsweise einen Leitrechner einer Rettungsstation. Ein Hubschrauber kann aufsteigen und einen Suchtrupp sehr gezielt zur lokalisierten Störung 86 bringen.

Sollten aus der Ferne keine ausreichenden Störungen 86 zu erkennen sein, so kann das Fluggerät 8 das gesamte System, das beispielsweise durch den Umriss 80 vom Bediener 10 festgelegt wurde, systematisch abrastern, wie zu FIG 6 beschrieben ist. Der Bediener 10 überwacht während dieses Vorgangs die übersandte visuelle Information 48 auf optische Auffälligkeiten, also in diesem Beispiel thermische Auffälligkeiten, und markiert eine jede durch das Ausgeben des Signals 60.

Alternativ zum Lawinenfeld kann ein verletzter Bergsteiger in einem Gebirge gesucht werden. Auch eine Untersuchung von Gebäude- oder Brückenelementen, technischer Anlagen, z.B. eines Rohrsystems einer Raffinerie, oder von Fahrzeugen, z.B. einem Passagierflugzeug, ist möglich. Während bei Untersuchungen zur Erkennung von Störungen mit senkrechter Ausrichtung beziehungsweise Gesichtsfeldrichtung auf einen Höhensensor verzichtet werden kann, da es im Wesentlichen auf die Horizontalkoordinaten ankommen, ist bei Ausrichtungen außerhalb der Horizontalen zweckmäßigerweise ein Höhensensor vorhanden, insbesondere im Modul 60. Die Höhendaten des Sensors sind dann zweckmäßigerweise Bestandteil der Koordinatendaten.

### Bezugszeichenliste

- 2: Photovoltaikanlage
- 4: Photovoltaikmodul
- 6: System
- 8: Fluggerät
- 10: Bediener
- 12: Steuergerät
- 14: Kamera
- 16: Blickfeld
- 18: Anzeigefeld
- 20: Kommunikationseinheit
- 22: Kommunikationseinheit
- 24: GPS-Empfänger
- 26: Speichermedium
- 28: Kamera
- 30: Datenmodul
- 32: Kommunikationseinheit
- 34: GPS-Empfänger
- 36: Mobilgerät
- 38: Anzeigefeld
- 40: Auslöser
- 42: Server
- 44: Gebäude
- 46: Steuerdaten
- 48: visuelle Information
- 50: Störung
- 52: String
- 54: Störung
- 56: Störung
- 58: Position
- 60: Signal
- 62: Koordinatendaten
- 64: Zugreifen
- 66: Speichern
- 68: Auslesen
- 70: Zwischenspeicher
- 72: Zwischenspeicherung
- 74: Position
- 76: Flugweg
- 78: Gebäude
- 80: Umriss
- 82: Landschaft
- 84: Lawinenfeld
- 86: Störung

## Patentansprüche

1. Verfahren zum Lokalisieren einer Störung (50, 54, 56, 86) eines Systems (6), bei dem ein unbemanntes Fluggerät (8) das System (6) überfliegt und Bilder vom System (6) aufnimmt und aus Bilddaten gewonnene visuelle Information (48) an einen das Fluggerät (8) vom Boden aus bedienenden Bediener (10) gesendet wird,
**dadurch gekennzeichnet,**
**dass** der Bediener (10) die Störung (50, 54, 56, 86) aus der visuellen Information (48) erkennt und ein Signal (60) auslöst und durch das Signal (60) die Übermittlung der Geokoordinaten des unbemannten Fluggeräts (8) und eine Abbildung der Störung (50, 54, 56, 86) an einen bodengebundenen Server (42) übertragen werden.

2. Verfahren nach Anspruch 1,
**dadurch gekennzeichnet,**
**dass** das System (6) eine technische Anlage und die Störung (50, 54, 56) ein Defekt eines Elements der Anlage ist.

3. Verfahren nach Anspruch 1 oder 2,
**dadurch gekennzeichnet,**
**dass** die Störung (86) zumindest ein Mensch in einem unerwünschten Zustand in einer Ansammlung von Menschen oder einem Ökosystem ist, wobei ein Mensch in einem unerwünschten Zustand in einer Ansammlung von Menschen ein Mensch mit einem unerwünschtem Verhalten ist, und wobei ein Mensch in einem unerwünschten Zustand in einem Ökosystem ein verunglückter Bergsteiger oder ein Lawinenopfer ist.

4. Verfahren nach einem der vorhergehenden Ansprüche,
**dadurch gekennzeichnet,**
**dass** der Bediener (10) den Flug des Fluggeräts (8) von einem mobilen Steuergerät (12) aus steuert und das Signal (60) an einem zusätzlichen Mobilgerät (36) auslöst, das Signal (60) von einer Applikation des Mobilgeräts (36) erzeugt wird, das das Signal (60) über WLAN zum Fluggerät (8) sendet, das Fluggerät (8) auf Anforderung durch das Signal (60) ein Einzelbild von der Störung (50, 54, 56, 86) und seine Koordinaten an das Mobilgerät (36) sendet, das die Daten an den Server (42) weiterleitet.

5. Verfahren nach einem der vorhergehenden Ansprüche,
**dadurch gekennzeichnet,**
**dass** das Fluggerät (8) über ein erstes Datenmodul mit einem GPS-Empfänger (24) und einem Sender (22) in seinem Flug gesteuert wird und die visuelle Information (48) sendet und über ein davon unabhängiges zweites Datenmodul (30) mit einem GPS-Empfänger (34) und einem Sender (32) die Geokoordinaten und die Abbildung der Störung (50, 54, 56, 86) übermittelt.

6. Verfahren nach einem der vorhergehenden Ansprüche,
**dadurch gekennzeichnet,**
**dass** im Fluggerät (8) ausgelöst durch das Signal (60) ein vorbestimmtes Bild einer Kamera (14, 28) des Fluggeräts (8) aus einem Speichermedium (26, 70) des Fluggeräts (8) ausgelesen (68) und als Abbildung der Störung (50, 54, 56, 86) gesendet wird.

7. Verfahren nach einem der vorhergehenden Ansprüche,
**dadurch gekennzeichnet,**
**dass** im Fluggerät (8) ein von einer Kamera (14, 28) des Fluggeräts (8) aufgenommener Flugfilm vor seiner Speicherung auf einem Speichermedium (26) des Fluggeräts (8) abgegriffen, zwischengespeichert (72) und in einer Schleife stets überschrieben wird und ausgelöst durch das Signal (60) ein vorbestimmtes Bild aus dem Flugfilm aus dem Zwischenspeicher (70) entnommen und als Abbildung der Störung (50, 54, 56, 86) gesendet wird.

8. Verfahren nach einem der vorhergehenden Ansprüche,
**dadurch gekennzeichnet,**
**dass** das Fluggerät (8) ausgelöst durch das Signal (60) einen vorgegebenen Flugweg verlässt, ein Stück weit in Bildaufnahmerichtung der Abbildung der Störung (50, 54, 56, 86) absinkt, eine weitere Geokoordinate als Nahkoordinate sendet, in einer vorprogrammierten Weise eine Nahaufnahme der Störung (50, 54, 56, 86) aufnimmt, die in Form eines Einzelbilds als Nahabbildung der Störung (50, 54, 56, 86) an den Server (42) übertragen wird, und das Fluggerät (8) anschließend selbständig wieder auf seine vorgegebene Flugbahn aufsteigt.

9. Verfahren nach einem der vorhergehenden Ansprüche,
**dadurch gekennzeichnet,**
**dass** das Fluggerät (8) das System (6) zunächst in einer größeren Höhe überfliegt, aus der das gesamte System (6) durch eine Kamera (14, 28) des Fluggeräts (8) abgebildet wird, der Bediener (10) mehrere voneinander räumlich getrennte Störungen (50, 54, 56, 86) erkennt und auf einer Anzeige (38) manuell markiert und die Anzahl der markierten Störungen (50, 54, 56, 86) und ihre räumliche Anordnung zueinander gespeichert werden.

10. Verfahren nach Anspruch 9,
**dadurch gekennzeichnet,**
**dass** die Position einer markierten Störung (50, 54, 56, 86) berechnet wird und das Fluggerät (8) selbständig diese beziehungsweise jede der berechneten Positionen anfliegt.

11. Verfahren nach Anspruch 9 oder 10,
**dadurch gekennzeichnet,**
**dass** der Bediener zu jeder der markierten Störungen (50, 54, 56, 86) ein Signal auslöst, wenn sich das Fluggerät (8) an der betreffenden Störung (50, 54, 56, 86) befindet, wobei das Signal (60) andere Information enthält, wenn die zuvor markierte Störung (50, 54, 56, 86) in Wirklichkeit keine Störung (50, 54, 56, 86) ist, als wenn die Störung (50, 54, 56, 86) eine Störung (50, 54, 56, 86) ist.

12. Verfahren nach einem der Ansprüche 9 bis 11,
**dadurch gekennzeichnet,**
**dass** dem Bediener (10) angezeigt wird, ob alle markierten Störungen (50, 54, 56, 86) angeflogen wurden.

13. Verfahren nach einem der vorhergehenden Ansprüche,
**dadurch gekennzeichnet,**
**dass** das Fluggerät (8) das System (6) zunächst in einer größeren Höhe überfliegt, aus der das gesamte System (6) durch eine Kamera (14, 28) des Fluggeräts (8) abgebildet wird, der Bediener (10) einen Umriss (80) des Systems (6) und zwei Positionen (74) markiert, das Fluggerät (8) zu beiden Positionen (74) fliegt, deren Geokoordinaten bestimmt werden und daraus die Geokoordinaten des Umrisses (80) und daraus eine Flugroute (76) über das System (6).

14. Verfahren nach einem der vorhergehenden Ansprüche,
**dadurch gekennzeichnet,**
**dass** das System (6) eine Photovoltaikanlage (2) ist und die Abbildung der Störung (50, 54, 56, 86) auf ihre Ausdehnung untersucht wird und bestimmt wird, über wie viele PV-Module (4) die Störung (50, 54, 56, 86) reicht, und die Störung in Abhängigkeit ihrer Ausdehnung klassifiziert wird, und dem Bediener (10) in Abhängigkeit des Ergebnisses der Klassifikation eine Mitteilung mit einer Fluganweisung gemacht wird.

15. Vorrichtung zum Lokalisieren einer Störung (50, 54, 56, 86) eines Systems (6), umfassend ein unbemanntes Fluggerät (8) mit einer Kamera (14, 28), ein Steuergerät (12) für einen das Fluggerät (8) vom Boden aus bedienenden Bediener (10) mit einer Anzeige (18) zum Anzeigen von aus Bilddaten der Kamera (14, 28) gewonnener visueller Information (48), ein Signalgerät (36) mit einem Auslöser (40) zum Auslösen eines Signals (60) durch den Bediener (10) und zum Senden des Signals (60) an das Fluggerät (8), und einem Datenmodul (30) des Fluggeräts (8), das dazu vorbereitet ist, auslöst durch das Signal (60) die Übermittlung der aktuellen Geokoordinaten des Fluggeräts (8) und einer von der Kamera (14, 28) aktuell aufgenommenen Abbildung an das Signalgerät (36) zu steuern.

## Claims

1. Method for locating a disturbance (50, 54, 56, 86) of a system (6) for which an unmanned flight device (8) flies over the system (6) and takes pictures of the system (6), and visual information (48) obtained from image data is sent to an operator (10) who operates the flight device (8) from the ground,
**characterized in that** the operator (10) detects the disturbance (50, 54, 56, 86) from the visual information (48) and triggers a signal (60), and the signal (60) triggers the transmission of the geographic coordinates of the unmanned flight device (8) and an image of the disturbance (50, 54, 56, 86) to a ground-based server (42).

2. Method according to claim 1, **characterized in that** the system (6) is a technical installation and the disturbance (50, 54, 56) is a defect of an element of the installation.

3. Method according to claim 1 or 2, **characterized in that** the disturbance (86) is at least one human being in an undesirable condition in a gathering of human beings or in an ecosystem, wherein a human being in an undesirable condition in a gathering of human beings is a human being with an undesired behavior and wherein a human being in an undesirable condition in an ecosystem is an injured mountaineer or an avalanche victim.

4. Method according to one of the preceding claims, **characterized in that** the operator (10) controls the flight of the flight device (8) from a mobile control device (12) and triggers the signal (60) to an additional mobile device (36), the signal (60) is generated by an application of the mobile device (36) that sends the signal (60) via WLAN to the flight device (8), the flight device (8) on demand of the signal (60) sends a single image of the disturbance (50, 54, 56, 86) and the coordinates thereof to the mobile device (36) that transmits the data to the server (42).

5. Method according to one of the preceding claims, **characterized in that** the flight device (8) is controlled in its flight by a first data module with a GPS-receiver (24) and an emitter (22) and sends the visual information (48) and transmits the geographic data and the representation of the disturbance (50, 54, 56, 86) over a second data module (30) independent therefrom with a GPS-receiver (34) and an emitter (32).

6. Method according to one of the preceding claims, **characterized in that** a predefined image of a camera (14, 28) of the flight device (8) is read out (68) from a storage medium (26, 70) of the flight device (8), this being triggered in the flight device (8) by the signal (60), and is sent as representation of the disturbance (50, 54, 56, 86).

7. Method according to one of the preceding claims, **characterized in that** a flight film recorded in the flight device (8) by a camera (14, 28) of the flight device (8) is picked up before its storage on a storage medium (26) of the flight device (8), is temporarily stored (72) and is continuously overwritten in a loop, and a predefined image is removed from the flight film from the intermediate storage (70) and is sent as representation of the disturbance (50, 54, 56, 86), this being triggered by the signal (60).

8. Method according to one of the preceding claims, **characterized in that** the flight device (8) leaves a predefined flight path, this being triggered by the signal (60), descends over a certain distance in the image taking direction of the representation of the disturbance (50, 54, 56, 86), sends a further geographic coordinate as close coordinate, takes in a preprogrammed manner a close-up of the disturbance (50, 54, 56, 86) that is transmitted to the server (42) as a single image as close representation of the disturbance (50, 54, 56, 86) and the flight device (8) then autonomously ascends again onto its predefined flight path.

9. Method according to one of the preceding claims, **characterized in that** the flight device (8) flies over the system (6) first at a greater height from which the whole system (6) is represented by a camera (14, 28) of the flight device (8), the operator (10) detects several disturbances (50, 54, 56, 86) spatially separate from each other and manually marks them on a display (38) and the number of marked disturbances (50, 54, 56, 86) and their spatial arrangement to one another are stored.

10. Method according to claim 9, **characterized in that** the position of a marked disturbance (50, 54, 56, 86) is calculated and the flight device (8) autonomously flies to this position or to each of the calculated positions.

11. Method according to claim 9 or 10, **characterized in that** the operator triggers a signal for each of the marked disturbances (50, 54, 56, 86) when the flight device (8) is at the respective disturbance (50, 54, 56, 86), wherein the signal (60) contains another information if the previously marked disturbance (50, 54, 56, 86) in fact is not a disturbance (50, 54, 56, 86) and if the disturbance (50, 54, 56, 86) is a disturbance (50, 54, 56, 86).

12. Method according to one of the claims 9 to 11, **characterized in that** it is displayed to the operator (10) if all the marked disturbances (50, 54, 56, 86) have been headed for.

13. Method according to one of the preceding claims, **characterized in that** the flight device (8) flies over the system (6) first at a greater height from which the whole system (6) is represented by a camera (14, 28) of the flight device (8), the operator (10) marks a contour (80) of the system (6) and two positions (74), the flight device (8) flies to both positions (74), the geographic coordinates of which are determined and therefrom the geographic coordinates of the contour (80) and therefrom a flight route (76) over the system (6).

14. Method according to one of the preceding claims, **characterized in that** the system (6) is a photovoltaic plant (2) and the representation of the disturbance (50, 54, 56, 86) is checked with respect to its extension and it is determined over how many PV modules (4) the disturbance (50, 54, 56, 86) extends and the disturbance is classified depending on its extension and a notification with a flight instruction is given to the operator (10) depending on the result of the classification.

15. Device for locating a disturbance (50, 54, 56, 86) of a system (6) comprising an unmanned flight device (8) with a camera (14, 28), a control device (12) for an operator (10) who operates the flight device (8) from the ground, with a display (18) for displaying visual information (48) obtained from image data of the camera (14, 28), a signal device (36) with a trigger (40) for triggering a signal (60) through the operator (10) and for sending the signal (60) to the flight device (8), and a data module (30) of the flight device (8) that is arranged, triggered by the signal (60), for controlling the transmission to the signal device (36) of the current geographic coordinates of the flight device (8) and of a representation currently taken by the camera (14, 28).

## Revendications

1. Procédé pour localiser une panne (50, 54, 56, 86) d'un système (6) dans lequel un appareil volant sans équipage (8) survole le système (6) et enregistre des images du système (6) et que des informations visuelles (48) obtenues à partir de données d'image sont envoyées à un opérateur (10) qui commande l'appareil volant (8) à partir du sol, **caractérisé en ce que** l'opérateur (10) détecte la panne (50, 54, 56, 86) à partir des informations visuelles (48) et déclenche un signal (60) et la transmission des données géographiques de l'appareil volant sans équipage (8) et une représentation de la panne (50, 54, 56, 86) sont transmises à un serveur lié au sol (42), ceci étant déclenché par le signal.

2. Procédé selon la revendication 1, **caractérisé en ce que** le système (6) est une installation technique et la panne (50, 54, 56) un défaut d'un élément de l'installation.

3. Procédé selon la revendication 1 ou 2, **caractérisé en ce que** la panne (86) est au moins un être humain dans un état non souhaité dans un rassemblement d'êtres humains ou un écosystème, cependant qu'un être humain dans un état non souhaité dans un rassemblement d'êtres humains est un être humain avec un comportement non souhaité et cependant qu'un être humain dans un état non souhaité dans un écosystème est un alpiniste accidenté ou une victime d'avalanche.

4. Procédé selon l'une des revendications précédentes, **caractérisé en ce que** l'opérateur (10) commande le vol de l'appareil de vol (8) à partir d'un appareil de commande mobile (12) et déclenche le signal (60) à un appareil mobile supplémentaire (36), le signal (60) est généré par une application de l'appareil mobile (36) qui envoie le signal (60) par wifi à l'appareil de vol (8), l'appareil de vol (8) envoie, sur demande par le signal (60), une image unique de la panne (50, 54, 56, 86) et ses coordonnées à l'appareil mobile (36) qui transmet les données au serveur (42).

5. Procédé selon l'une des revendications précédentes, **caractérisé en ce que** l'appareil de vol (8) est commandé dans son vol par un premier module de données avec un récepteur GPS (24) et un émetteur (22) et envoie les informations visuelles (48) et transmet, par un second module de données (30) indépendant de celui-ci avec un récepteur GPS (34) et un émetteur (32), les coordonnées géographiques et la représentation de la panne (50, 54, 56, 86).

6. Procédé selon l'une des revendications précédentes, **caractérisé en ce qu'**une image prédéfinie d'une caméra (14, 28) de l'appareil de vol (8), déclenchée dans l'appareil de vol (8) par le signal (60), est extraite d'un support de stockage (26, 70) de l'appareil de vol (8) et est envoyée comme représentation de la panne (50, 54, 56, 86).

7. Procédé selon l'une des revendications précédentes, **caractérisé en ce qu'**un film de vol enregistré par une caméra (14, 28) de l'appareil de vol (8) est extrait dans l'appareil de vol (8) avant son stockage sur un support de stockage (26) de l'appareil de vol (8), stocké temporairement (72) et constamment réécrit en boucle et une image prédéfinie est prélevée du film de vol de la mémoire intermédiaire (70 et est envoyée comme représentation de la panne (50, 54, 56, 86, ceci étant déclenché par le signal (60).

8. Procédé selon l'une des revendications précédentes, **caractérisé en ce que** l'appareil de vol (8) quitte une trajectoire de vol prédéfinie, ceci étant déclenché par le signal (60), descend d'une certaine distance dans la direction d'enregistrement des images de la représentation de la panne (50, 54, 56, 86), envoie une autre coordonnée géographique comme coordonnée proche, enregistre d'une manière préprogrammée un plan rapproché de la panne (50, 54, 56, 86) qui est transmis au serveur (42) sous forme d'image unique comme représentation en gros plan de la panne (50, 54, 56, 86) et l'appareil de vol (8) remonte ensuite de manière autonome sur sa trajectoire prédéfinie.

9. Procédé selon l'une des revendications précédentes, **caractérisé en ce que** l'appareil de vol (8) survole le système (6) tout d'abord à une plus grande altitude à partir de laquelle l'ensemble du système (6) est représenté par une caméra (14, 28) de l'appareil de vol (8), l'opérateur (10) détecte plusieurs pannes séparées spatialement l'une de l'autre (50, 54, 56, 86) et les marque manuellement sur un écran (38) et le nombre des pannes marquées (50, 54, 56, 86) et leur disposition dans l'espace l'une par rapport à l'autre sont mémorisés.

10. Procédé selon la revendication 9, **caractérisé en ce que** la position d'une panne marquée (50, 54, 56, 86) est calculée et l'appareil de vol (8) vole de manière autonome vers cette position ou chacune des positions calculées.

11. Procédé selon la revendication 9 ou 10, **caractérisé en ce que** l'opérateur déclenche un signal pour chacune des pannes marquées (50, 54, 56, 86) lorsque l'appareil de vol (8) se trouve à l'endroit de la panne concernée (50, 54, 56, 86), le signal (60) contenant d'autres informations si la panne marquée précédemment (50, 54, 56, 86) en réalité n'est pas une panne (50, 54, 56, 86) et si la panne (50, 54, 56, 86) est une panne (50, 54, 56, 86).

12. Procédé selon l'une des revendications 9 à 11, **caractérisé en ce qu'**il est affiché à l'opérateur (10) si toutes les pannes marquées (50, 54, 56, 86) ont été approchées en vol.

13. Procédé selon l'une des revendications précédentes, **caractérisé en ce que** l'appareil de vol (8) survole le système (6) tout d'abord à une plus grande altitude à partir de laquelle l'ensemble du système (6) est représenté par une caméra (14, 28) de l'appareil de vol (8), l'opérateur (10) marque des contours (80) du système (6) et deux positions (74), l'appareil de vol (8) vole vers les deux positions (74) dont les coordonnées géographiques sont déterminées et à partir de celles-ci les coordonnées géographiques des contours (80) et à partir de celles-ci une trajectoire de vol (76) au-dessus du système (6).

14. Procédé selon l'une des revendications précédentes, **caractérisé en ce que** le système (6) est une installation photovoltaïque (2) et la représentation de la panne (50, 54, 56, 86) est analysée quant à son extension et qu'il est déterminé sur combien de modules photovoltaïques (4) la panne (50, 54, 56, 86) s'étend et la panne est classée en fonction de son extension et qu'il est fait une notification avec une instruction de vol à l'opérateur (10) en fonction du résultat du classement.

15. Dispositif pour localiser une panne (50, 54, 56, 86) d'un système (6) qui comprend un appareil volant sans équipage (8) avec une caméra, (14, 28), un appareil de commande (12) pour un opérateur (10) qui commande l'appareil volant (8) à partir du sol avec un écran (18) pour afficher des informations visuelles (48) obtenues à partir de données d'image de la caméra (14, 28), un appareil de signal (36) avec un déclencheur (40) pour déclencher un signal (60) par l'opérateur (40) et pour envoyer le signal (60) à l'appareil de vol (8) et un module de données (30) de l'appareil de vol (8) qui est agencé pour commander la transmission à l'appareil de signal (36) des coordonnées géographiques actuelles de l'appareil de vol (8) et d'une représentation enregistrée actuellement par la caméra (14, 28), ceci étant déclenché par le signal (60).
